# EUROPEAN PATENT APPLICATION

(11) **EP 1 569 317 A2**
(43) Date of publication of application: **31.08.2005**
(21) Application number: 05003680.5
(22) Date of filing: 21.02.2005
(51) Int. Cl.: H02J 7/00

(54) **Charging control system**

(30) Priority: 24.02.2004 JP 2004048134
(71) Applicant: MATSUSHITA ELECTRIC WORKS, LTD., Osaka 571-8686 (JP)
(72) Inventor: Kubota, Atsumasa, Matsushita Electric Works Ltd, Kadoma-shi Osaka 571-8686 (JP); Ohashi, Toshiharu, Matsushita Electric Works Ltd, Kadoma-shi Osaka 571-8686 (JP)
(74) Representative: Appelt, Christian W.

(57) **Abstract**

A charging control system. The system has a function as a switch controller which includes a charge mode judging executor 66, a charging time monitoring executor 68 and a switch controlling executor 72. The executor 66 judges whether present control is a constant current control or a constant voltage control. The executor 68 monitors whether or not a constant current charging time exceeds a threshold time by utilizing a judging result of the executor 66. The executor 72 turns a switch 54 off when a monitoring result of the executor 68 indicates that the constant current charging time exceeds the threshold time.

## Description

### TECHNICAL FIELD

The invention relates a charging control system with a function for preventing overcharge of a rechargeable battery such as a lithium ion battery, a nickel hydrogen battery or the like, and a motor-driven tool set equipped with the system.

### BACKGROUND ART

A prior art device described Japanese Patent Publication No. 10-066277 comprises a rechargeable battery, a charging current and voltage control circuit which charges the battery by a constant current control and a constant voltage control, and a safety circuit located in a battery pack. The safety circuit restrains the device from charging the battery when voltage detected by itself reaches a predetermined first voltage.

The device also includes a charging voltage detection circuit and a battery voltage detection circuit. And the device is configured to restrain itself from charging the battery when voltage detected by the each detection circuit exceeds a predetermined second voltage higher than the first voltage. According to the device, overcharge of the battery can be preferably avoided.

However, in the construction that prevents the overcharge only by detecting the charging or battery voltage, there is a problem that the construction becomes complicated since a plural of voltage detection circuit is required.

### DISCLOSURE OF THE INVENTION

An object of the present invention is to prevent overcharge of a rechargeable battery by simple construction.

A charging control system of the present invention comprises a DC power source, a current detector, a voltage detector, a constant current controller, a constant voltage controller, a switch and a switch controller. The DC power source is configured to charge a rechargeable battery. The current detector is configured to detect current supplied to the battery by the source. The voltage detector is configured to detect voltage of the battery. The constant current controller is configured to control the source so as to regulate the current detected by the current detector to be equal to a predetermined reference current until the voltage detected by the voltage detector reaches a predetermined threshold voltage. The constant voltage controller is configured to control the source so as to regulate the voltage detected by the voltage detector to be equal to a predetermined reference voltage after the voltage detected by the voltage detector reaches the threshold voltage. The switch opens or closes an electrical connection between the source and the battery. The switch controller is configured to control the switch to open the above-mentioned electrical connection and keeps the connection open when a constant current charging time exceeds a predetermined threshold time. The constant current charging time is time while the source is controlled by the constant current controller. Thus, since the above-mentioned electrical connection is opened when the constant current charging time exceeds the threshold time, overcharge of the battery can be preferably prevented by simple construction

Preferably, the switch controller is configured to control the switch to open the above-mentioned electrical connection and keeps the connection open when the voltage detected by the voltage detector exceeds the threshold voltage. Thereby, the overcharge can be more preferably prevented.

The system may further comprise a temperature sensor which detects a temperature of the battery. And the switch controller is configured to control the switch to open the above-mentioned electrical connection and keeps the connection open when the temperature detected by the sensor exceeds a predetermined threshold temperature. Or the switch controller is configured to control the switch to open the electrical connection and keeps the connection open when a level-of-rise per unit time in the temperature detected by the sensor exceeds a predetermined threshold level per unit time. According to these configuration, the overcharge can be more preferably prevented.

The system may further comprise an amount counter which counts a total charging amount of the battery while the source is controlled by the constant current controller. In this case, the switch controller is configured to control the switch to open the above-mentioned electrical connection and keeps the connection open when the amount counted by the counter exceeds a predetermined threshold amount. According to the configuration, the overcharge can be more preferably prevented.

The system may further comprise a charging unit and a battery pack. The charging unit is equipped with the DC power source, the current detector, the voltage detector, the constant current controller, the constant voltage controller, the switch and the switch controller. The battery pack is equipped with the current detector, the voltage detector and the switch controller. Even if the switch cannot open the above-mentioned electrical connection due to any failure of the charging unit side, the switch can open the connection by the switch controller at the battery pack. As a result, the overcharge can be effectively prevented.

A motor-driven tool set comprises the system. The motor-driven tool set comprises a motor-driven tool with a motor, a battery pack with the rechargeable battery, and a charging unit. The battery pack is removably mounted in the tool to electrically connect the battery to the motor. The charging unit includes the DC power source, the current detector, the voltage detector, the constant current controller, the constant voltage controller, the switch and the switch controller. The charging unit is electrically connected to the battery pack. According to this invention, overcharge of the battery can be preferably prevented by simple construction since the above-mentioned electrical connection is opened when the constant current charging time exceeds the threshold time.

### BRIEF DESCRIPTION OF THE DRAWINGS

Preferred embodiments of the invention will now be described in further details. Other features and advantages of the present invention will become better understood with regard to the following detailed description and accompanying drawings where:
FIG. 1 shows a motor-driven tool set comprising a charging control system of a first embodiment according to the present invention,
FIG. 2 shows the motor-driven tool with the removab ly mounted battery pack in the arrangement of FIG. 1,
FIG. 3 shows the charging unit with the removably mounted battery pack in the arrangement of FIG. 1,
FIG.4 is a block diagram of the charging control system of FIG. 1,
FIG. 5 shows waveforms of battery voltage and charging current in the arrangement of FIG. 4,
FIG. 6 shows waveforms of battery voltage and charging current in the arrangement of FIG. 4,
FIG. 7 is a block diagram of a charging control system of a second embodiment according to the present invention,
FIG. 8 shows waveforms of charging current and battery temperature in the arrangement of FIG. 7,
FIG. 9 shows a detailed example of the second embodiment,
FIG. 10 is a block diagram of a motor-driven tool with the removably mounted battery pack of FIG. 9,
FIG. 11 is a block diagram of a charging control system of a third embodiment according to the present invention,
FIG. 12 shows waveforms of charging current and battery temperature in the arrangement of FIG. 11,
FIG. 13 shows a block diagram of a charging control system of a fourth embodiment according to the present invention, and
FIG. 14 is a block diagram of a charging control system of a fifth embodiment according to the present invention.

### BEST MODE FOR CARRYING OUT THE INVENTION

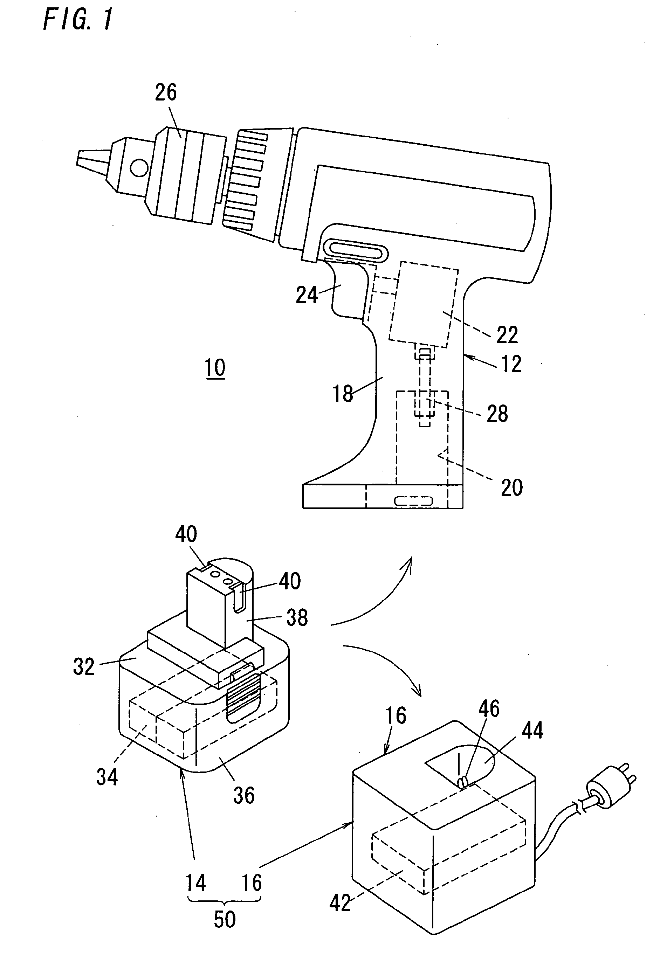

FIG. 1 shows a motor-driven tool set 10 comprising a charging control system 50 of a first embodiment according to the present invention. The set 10 comprises a motor-driven tool 12 which constitutes a rechargeable drill driver, a battery pack 14 removably mounted to the tool 12, and a charging unit 16 which charges the pack 14.

The motor-driven tool 12 includes a mount part 20, a motor 22, a trigger switch 24 and a chuck (rotation part) 26. The mount part 20 is formed inside a pistol grip handle of a tool body 18 of the tool 12, to which the pack 14 is mounted in a removable state. The motor 22 is contained in the body 18 and driven by current supplied from the pack 14. The switch 24 is located at the handle of the body 18 and controls so as to turn the supply of current to the motor 22 on and off. The chuck 26 is located at a tip of the body 18 and chucks a drill, a bit or the like in a removable state. The mount part 20 also has a pair of electrode terminals 28 (one of them is shown in FIG. 1) which are attached at its bottom and electrically coupled to the motor 22.

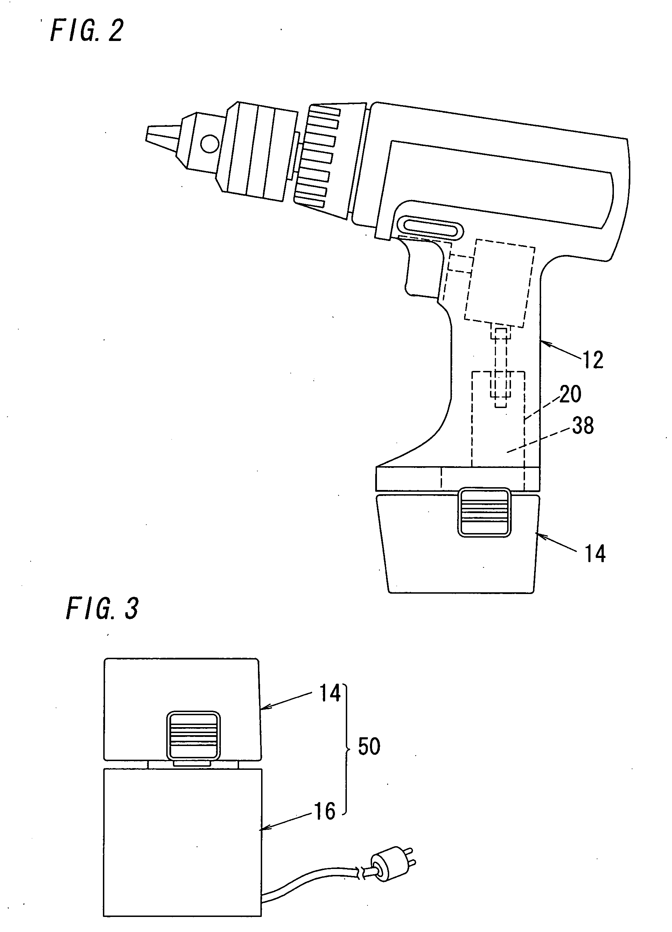

The battery pack 14 includes a pack body 36 and an electrode part 38. The body 36 contains a rechargeable battery 34 such as a lithium ion battery inside its casing 32. The electrode part 38 is extruded from a surface side of the body 36 and mounted at the mount part 20. The part 38 has a pair of electrode terminals 40, 40 which are attached at opposite sides of its tip and electrically coupled to electrodes of the battery 34. These terminals 40, 40 are also elastically contacted to the terminals 28, 28 when the electrode part 38 (battery pack 14) is mounted to the mount part 20, as shown in FIG. 2.

The charging unit 16 contains therein a circuit block 42 and has a mount cavity 44 at side of its top surface. The block 42 constitutes a DC power source, a controller or the like. The cavity 44 has a pair of electrode terminals 46 (one of them is shown in FIG. 1) which are attached at opposite sides of its inside and electrically coupled to the block 42. These terminals 46 are also elastically contacted to the terminals 40, 40 when the electrode part 38 is removably mounted to the cavity 44, as shown in FIG. 3. Thus, these battery pack 14 and charging unit 16 are electrically coupled each other to constitute the charging control system 50.

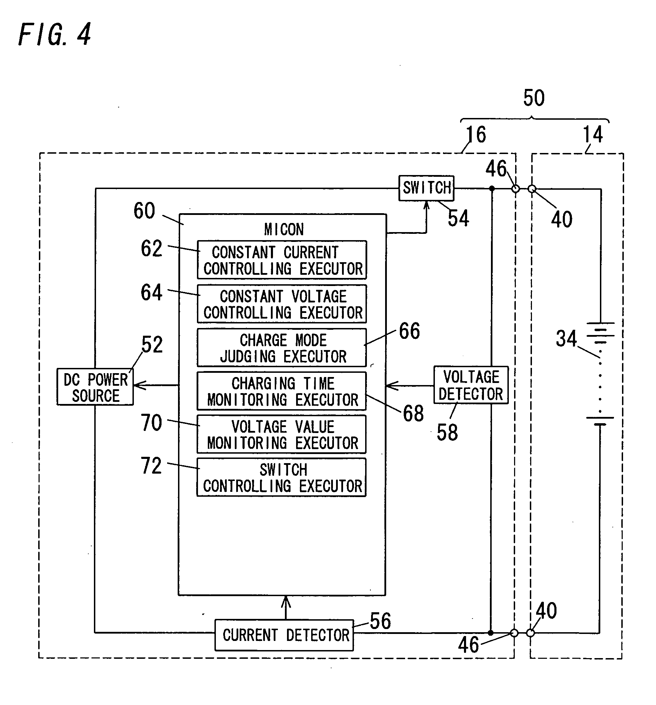

FIG. 4 shows the charging control system 50. In the battery pack 14, the rechargeable battery 34 is electrically coupled between the terminals 40, 40. The charging unit 16 is constructed with the DC power source 52, a switch 54, a current detector 56, a voltage detector 58 and a MICON (microcomputer) 60 which constitutes the above-mentioned controller. The source 52 supplies current to the battery 34 for its charge. The switch 54 is electrically coupled between one output terminal of the source 52 and one terminal 46. The detector 56 is electrically coupled between other output terminal of the source 52 and other terminal 46. The detector 58 is electrically coupled between the terminals 46, 46 in the unit 16. The MICON 60 executes a constant current control and a constant voltage control as a regulation controller, and executes a switch control of the switch 54 as a switch controller.

The DC power source 52 is constructed with an AC/DC converter, a DC/DC converter or the like, and has a control terminal through which its output voltage is regulated according to a control signal issued from the MICON 60. The switch 54 is comprised of a switch device such as a relay switch, FET or the like, and opens or closes an electrical connection between the source 52 and the battery 34. The current detector 56 detects a charging current supplied to the battery 34 by the source 52. The voltage detector 58 detects voltage of the battery 34 (ex. voltage across the battery 34). However, not limited to this, the voltage detector 58 may detect a charging voltage as the voltage of the battery 34 when a diode is further disposed between the terminal 46 and a connection node of the switch 54 and the voltage detector 58, and its cathode and anode are connected to the terminal 46 and the connection node respectively.

The MICON 60 is constructed with a CPU which executes an arithmetic process, a ROM which stores process programs, data or the like, a RAM which temporally restores data, or the like. And the MICON 60 comprises a constant current controlling executor 62 and a constant voltage controlling executor 64, which constitute the above-mentioned regulation controller. The MICON 60 also has a charge mode judging executor 66, a charging time monitoring executor 68, a voltage value monitoring executor 70 and a switch controlling executor 72, which constitute the above-mentioned switch controller. In the charging unit 16, there is further equipped with interface circuits for coupling the source 52, the switch 54 and the detectors 56, 58 to the MICON 60.

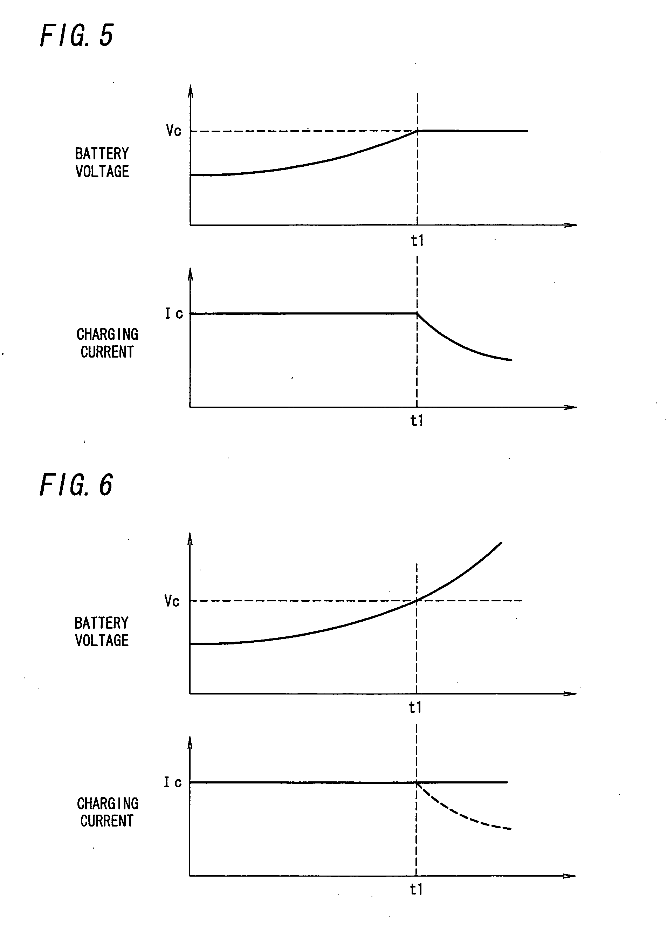

As shown in FIG. 5, the constant current controlling executor 62 executes the constant current control for controlling the source 52 so as to regulate the charging current detected by the detector 56 to be equal to a predetermined reference current Ic until the voltage detected by the detector 58 reaches a predetermined threshold voltage Vc. The constant current control is implemented from after the charging start until a point in time t1.

The constant voltage controlling executor 64 executes the constant voltage control for controlling the source 52 so as to regulate the voltage detected by the detector 58 to be equal to a predetermined reference voltage (which is, for example, equal to Vc) after the voltage detected by the detector 58 reaches the threshold voltage Vc.

The charge mode judging executor 66 judges whether present control (mode) is the constant current control or the constant voltage control. For example, the present control is judged as the constant voltage control when the voltage detected by the detector 58 is substantially equal to the threshold voltage Vc. The present control is judged as the constant current control when the voltage detected by the detector 58 does not reach the threshold voltage Vc.

In an alternate example, the present control is judged as the constant current control when the charging current detected by the detector 56 is substantially equal to the reference current Ic. The present control is judged as the constant voltage control when the charging current is gently decreasing or substantially lower than the reference current Ic.

The charging time monitoring executor 68 monitors whether or not a constant current charging time reaches or exceeds a predetermined threshold time (t1) by utilizing a built-in timer and the judging result of the executor 66. The constant current charging time is time while the source 52 is controlled by the constant current controlling executor 62. In this embodiment, the threshold time is set as the experimentally pre-obtained value (ex. fixed value).

The voltage value monitoring executor 70 monitors whether or not the voltage detected by the detector 58 in the constant current control (mode) reaches or exceeds the threshold voltage Vc by utilizing the judging result of the executor 66. In this embodiment, the reference voltage is set as the experimentally pre-obtained value (ex. fixed value) as corresponding to specified capacity of the battery 34.

The switch controlling executor 72 controls on/off of the switch 54 based on the monitoring result of the executor 70 as well as the prior art. That is, the executor 72 controls the switch 54 (i.e. turns it off) to open the above-mentioned electrical connection and keeps the connection open when the monitoring result indicates that the voltage detected by the detector 58 in the constant current control exceeds the threshold voltage Vc. This control is executed in case of abnormal operation of the detector 56 (ex. case that the detector 56 detects charging current less than the actual value). Or the control is executed in case that the mode is not changed over from the constant current control to the constant voltage control due to any failure of the constant voltage controlling executor 64.

The switch controlling executor 72 also controls on/off of the switch 54 based on the monitoring result of the executor 68 as a characteristic of this embodiment. That is, the executor 72 controls the switch 54 to open the above-mentioned electrical connection and keeps the connection open when the monitoring result indicates that the constant current charging time exceeds the threshold time (t1). Though the voltage detected by the detector 58 exceeds the threshold voltage Vc when the constant current charging time exceeds the threshold time, overcharge can be prevented by turning the switch 54 off. This control is executed in case that the charging voltage is not correctly detected due to any failure of the detector 58 (ex. in case that the detector 58 detects voltage less than the actual value). Or the control is executed in case that the mode is not changed over from the constant current control to the constant voltage control due to any failure of the constant current controlling executor 62.

In this embodiment, since the switch 54 is turned off when the voltage detected by the detector 58 in the constant current control exceeds the threshold voltage Vc, overcharge of the battery 34 can be prevented. Also, since the switch 54 is turned off when the constant current charging time exceeds the threshold time (t1), the overcharge can be preferably prevented.

In an alternate embodiment of the present invention, the threshold time (t1) is set as variable value. Namely, since remaining capacity of the battery 34 causes fluctuation of not only the constant current charging time until the charging voltage reaches the threshold voltage Vc but also the threshold time, the MICON 60 has a function formula (which is experimentally pre-obtained) for calculating the threshold time from each remaining capacity, and calculates the threshold time corresponding to present remaining capacity from the formula. Or the MICON 60 may pre-store each threshold time calculated from the formula in a table in its memory, and reads out the threshold time corresponding to the present remaining capacity from the memory. According to these embodiments, the overcharge is adaptively prevented. The present remaining capacity will be discussed later.

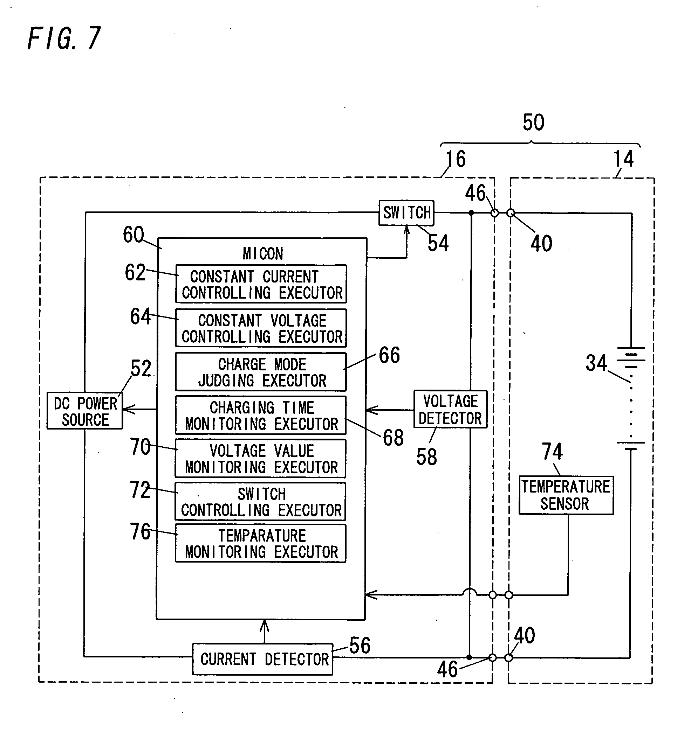

FIG. 7 shows a charging control system 50 of a second embodiment according to the present invention. The system 50 of the second embodiment is characterized by a temperature sensor 74 and a temperature monitoring executor 76, which are further comprised as compared with the first embodiment and utilized by the switch controlling executor 72.

The temperature sensor 74 detects a surface temperature of the battery 34 during charging after a prescribed time passes, and issues the detected temperature to the MICON 60. The sensor 74 is constructed with a thermistor or the like, and located at the battery pack 14 and its electrode terminal is attached at the electrode part 38 (cf. FIG. 1). An electrode terminal electrically coupled to the MICON 60 is attached in the mount cavity 44 so as to be electrically coupled to the terminal of the sensor 74.

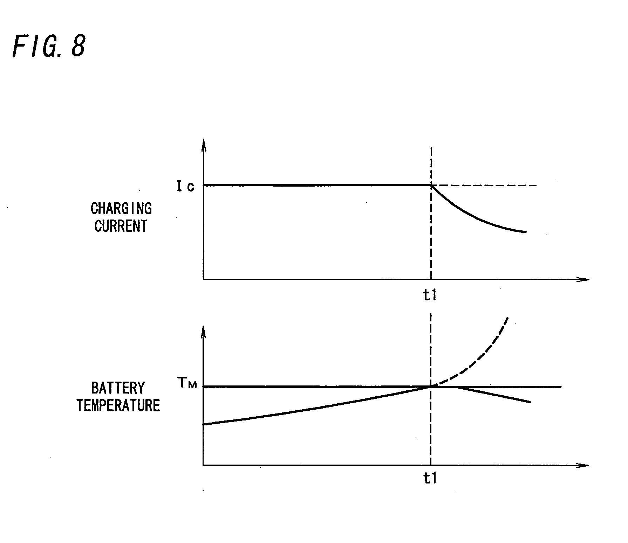

The temperature monitoring executor 76 is contained in the MICON 60, and monitors whether or not the temperature detected by the sensor 74 exceeds a predetermined threshold temperature T_{M} for judging overcharge as shown in FIG. 8. In this embodiment, the threshold temperature T_{M} is set as the experimentally pre-obtained value (ex. fixed value) as corresponding to specified capacity of the battery 34.

The monitoring result of the executor 76 is utilized by the switch controlling executor 72 of this second embodiment. That is, the executor 72 controls the switch 54 to open the above-mentioned electrical connection and keeps the connection open when the monitoring result indicates that the temperature detected by the sensor 74 exceeds the threshold temperature T_{M}.

In this second embodiment, when the system 50 normally works, the temperature of the battery 34 increases until the point in time t1 as shown in FIG. 8. At this time, the mode is changed over from the constant current control to the constant voltage control. And then, the temperature of the battery 34 gently decreases as shown by solid line in FIG. 8.

If the above-mentioned mode is not changed over to the constant voltage control, the temperature of the battery 34 further increases as shown by dotted line in FIG. 8. In this case, overcharge of the battery 34 occurs. However, according to this second embodiment, the overcharge can be more preferably prevented as compared with the first embodiment since the switch 54 is turned off when the temperature detected by the sensor 74 exceeds the threshold temperature T_{M}.

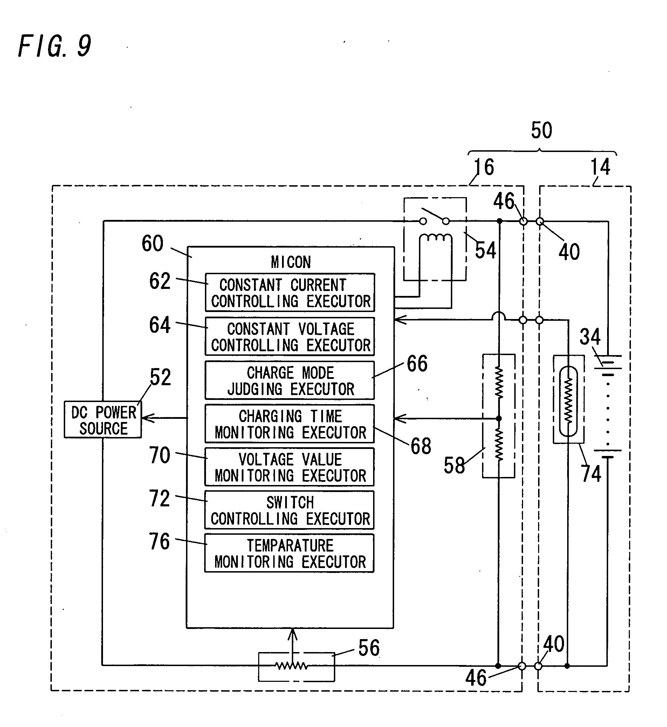

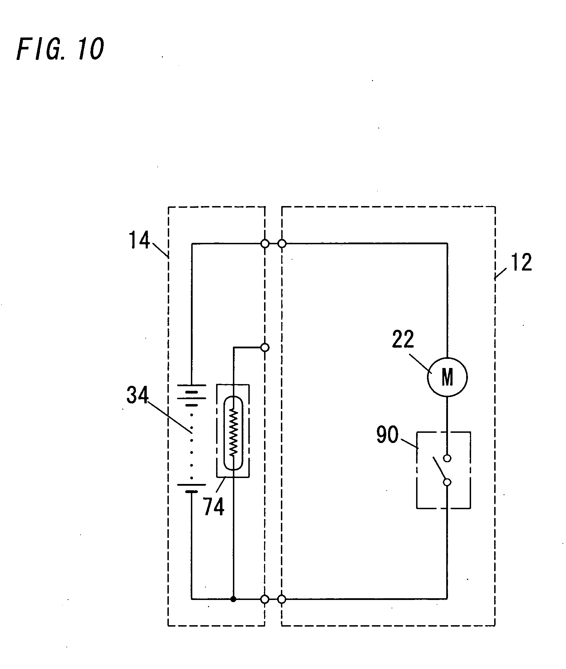

In a detailed example shown in FIG. 9 of this second embodiment, the switch 54 is constructed with a relay switch, the detectors 56, 58 are composed of resistors, and the temperature sensor 74 is composed of a thermistor. When the battery pack 14 is mounted to the mount part 20 of the tool 12, the battery 34 is electrically coupled in parallel with a series combination of the motor 22 and a switch 90 which is operated by the trigger switch 24 as shown in FIG. 10. The battery pack 14 is removed from the tool 12 before its over-discharging, and then its electrode part 38 is mounted to the cavity 44 of the charging unit 16 in order to charge the battery 34.

In another detailed example, the switch 54 is constructed with a FET. In this case, the FET exhibits a open circuit between its drain and source terminals when its gate is applied with a break signal from the switch controlling executor 72. Namely, the FET can open the electrical connection between the source 52 and the battery 34.

In an alternate embodiment, the threshold temperature T_{M} is set as variable value. Namely, since charging time depending on the remaining capacity of the battery 34 causes fluctuation of not only the surface temperature of the battery 34 but also the threshold temperature for monitoring the overcharge of the battery 34, the MICON 60 has a function formula (which is experimentally pre-obtained) for calculating the threshold temperature corresponding to each remaining capacity, and calculates the threshold temperature corresponding to present remaining capacity from the formula. Or the MICON 60 may pre-store each threshold temperature calculated from the formula in a table in its memory, and reads out the threshold temperature corresponding to the present remaining capacity from the memory. According to these embodiments, the overcharge is adaptively prevented. The present remaining capacity will be discussed later.

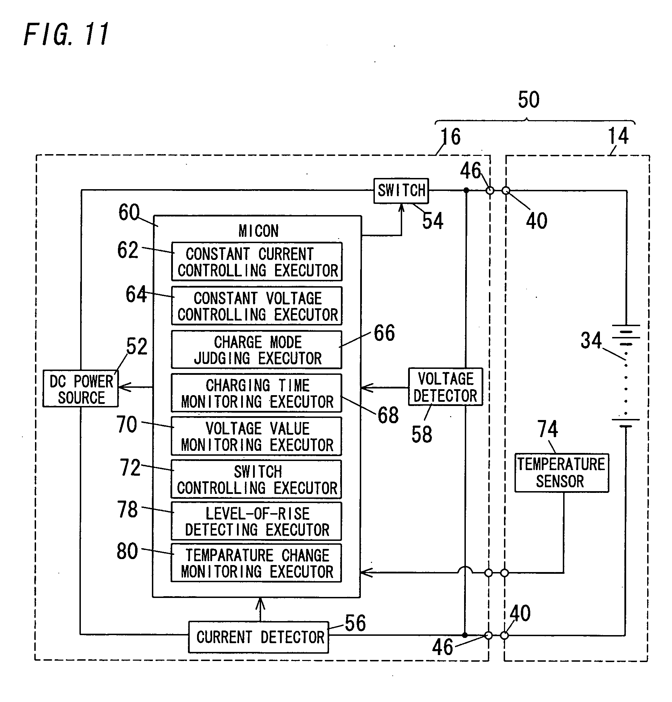

FIG. 11 shows a block diagram of a charging control system 50 of a third embodiment according to the present invention. The system 50 of the third embodiment is characterized by a level-of-rise detecting executor 78 and a temperature change monitoring executor 80, which are comprised instead of the temperature monitoring executor 76 as compared with the second embodiment and utilized by the switch controlling executor 72.

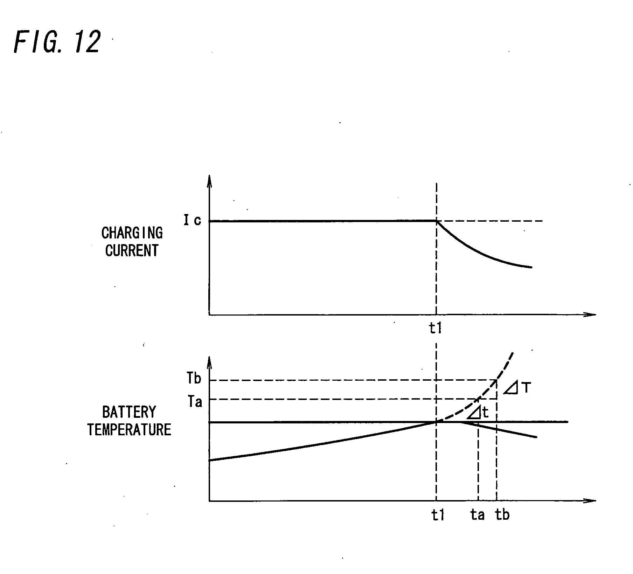

The level-of-rise detecting executor 78 is contained in the MICON 60, and calculates a level-of-rise per unit time in the surface temperature of the battery 34 based on the detected temperature from the temperature sensor 74. For example, the level-of-rise is a rate-of-rise, and the executor 78 calculates the level-of-rise by using a formula of (Tb-Ta)/(tb-ta) as shown in FIG. 12. Ta is the surface temperature of the battery 34 at a point in time ta. Tb is the surface temperature of the battery 34 at a point in time tb after a prescribed time passes.

In an alternate example, each level-of-rise per unit time is pre-calculated from a temperature difference ΔT (ΔT=Tb-Ta) and a time difference At (Δt=tb-ta) to be stored in a table in the memory of the MICON 60. And the executor 78 calculates the ΔT and the Δt, and then reads out the level-of-rise based on the ΔT and the Δt from the memory.

The temperature change monitoring executor 80 is contained in the MICON 60, and monitors whether or not the level-of-rise per unit time calculated by the executor 78 exceeds a predetermined threshold level per unit time. For example, the threshold level for monitoring overcharge is a threshold rate and set as the experimentally pre-obtained level (ex. fixed rate). In an alternate example, the level-of-rise is a value-of-rise and the executor 80 uses a threshold value (ex. fixed value) as the threshold level.

The monitoring result of the executor 80 is utilized by the switch controlling executor 72 of this third embodiment. That is, the executor 72 controls the switch 54 to open the above-mentioned electrical connection and keeps the connection open when the monitoring result indicates that the level-of-rise calculated by the executor 78 exceeds the threshold level.

In this third embodiment, when the system 50 normally works, the temperature of the battery 34 increases until the point in time t1 as shown in FIG. 12. At this time, the mode is changed over from the constant current control to the constant voltage control. And then, the temperature of the battery 34 gently decreases as shown by solid line in FIG. 12.

If the above-mentioned mode is not changed over to the constant voltage control due to any failure of the charging system, the level-of-rise per unit time (AT/At) becomes larger than that until the point in time t1 as shown by dotted line in FIG. 8. In this case, overcharge of the battery 34 occurs. However, according to this third embodiment, the overcharge can be more preferably prevented as compared with the second embodiment since the switch 54 is turned off when the level-of-rise calculated by the executor 78 exceeds the threshold level.

In an alternate embodiment of the present invention, the threshold level per unit time is set as variable level (variable rate or variable value) per unit time. Namely, since remaining capacity of the battery 34 causes fluctuation of not only the level-of-rise per unit time but also the threshold level per unit time, the MICON 60 has a function formula (which is experimentally pre-obtained) for calculating the threshold level per unit time from each remaining capacity, and calculates the threshold level per unit time corresponding to present remaining capacity from the formula. Or the MICON 60 may pre-store each threshold level per unit time calculated from the formula in a table in its memory, and reads out the threshold level per unit time corresponding to the present remaining capacity from the memory. According to these embodiments, the overcharge is adaptively prevented. The present remaining capacity will be discussed later.

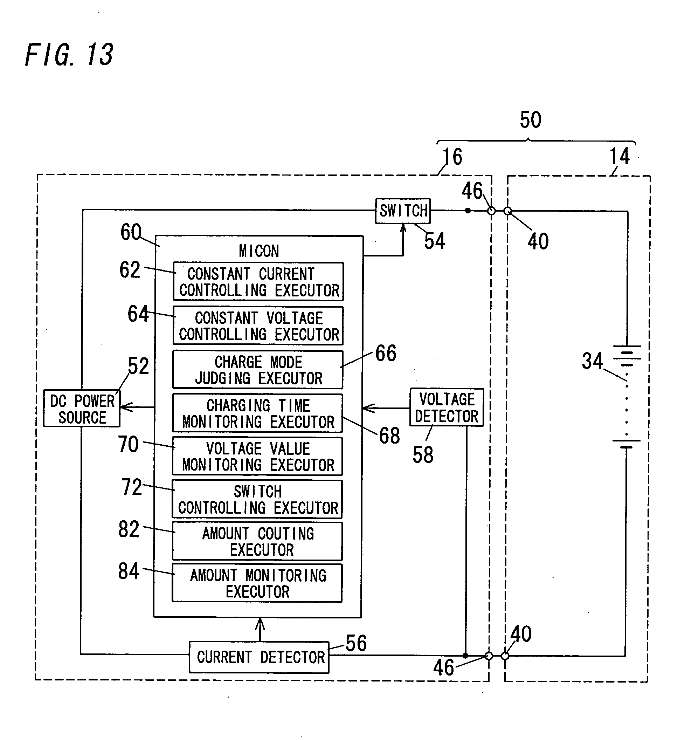

FIG. 13 shows a charging control system 50 of a fourth embodiment according to the present invention. The system 50 of the fourth embodiment is characterized by an amount counting executor 82 and an amount monitoring executor 84, which are further comprised as compared with the first embodiment and utilized by the switch controlling executor 72.

The amount counting executor 82 is contained in the MICON 60, and counts a total charging amount (a charging current value x a charging time) of the battery 34 while the source 52 is controlled by the constant current controlling executor 62. For example, the executor 82 calculates the total charging amount by integrating multiplication value of the charging current detected by the current detector 56 and a charging time count by the built-in timer.

The amount monitoring executor 84 is contained in the MICON 60, and monitors whether or not the total charging amount counted by the executor 82 exceeds a predetermined threshold amount for monitoring the overcharging. This threshold amount is set as the experimentally pre-obtained value (ex. fixed value).

The monitoring result of the executor 84 is utilized by the switch controlling executor 72 of this fourth embodiment. That is, the executor 72 controls the switch 54 to open the above-mentioned electrical connection and keeps the connection open when the monitoring result indicates that the total charging amount counted by the executor 82 exceeds the threshold amount.

In this fourth embodiment, it is possible to regard the charging state as, for example, charging completion or a full charging state when the total charging amount counted by the executor 82 reaches the threshold amount. Therefore, when the total charging amount exceeds the threshold amount, the charging state can be regarded as an overcharging state. As a result, the overcharge can be prevented by turning the switch 54 off when the total charging amount exceeds the threshold amount.

In an alternate embodiment, the system 50 has the same configuration as the fourth embodiment, and further comprises the temperature sensor 74 and the temperature monitoring executor 76 as well as the second embodiment.

In another alternate embodiment, the system 50 has the same configuration as the fourth embodiment, and further comprises the temperature sensor 74, the level-of-rise detecting executor 78 and the temperature change monitoring executor 80 as well as the third embodiment.

In other alternate embodiment of the present invention, the threshold amount is set as variable value. Namely, since remaining capacity of the battery 34 causes fluctuation of not only total charging amount counted by the executor 82 but also the threshold amount, the MICON 60 has a function formula (which is experimentally pre-obtained) for calculating the threshold amount from each remaining capacity, and calculates the threshold amount corresponding to present remaining capacity from the formula. Or the MICON 60 may pre-store each threshold amount calculated from the formula in a table in its memory, and reads out the threshold amount corresponding to the present remaining capacity from the memory. According to these embodiments, the overcharge is adaptively prevented.

And the above-mentioned present remaining capacity is obtained from a function formula or table for defining the relationship between a plural of charging time and a plural of remaining capacity corresponding to the each charging time. The charging time can be substituted for charging amount, battery voltage, charging voltage or the like.

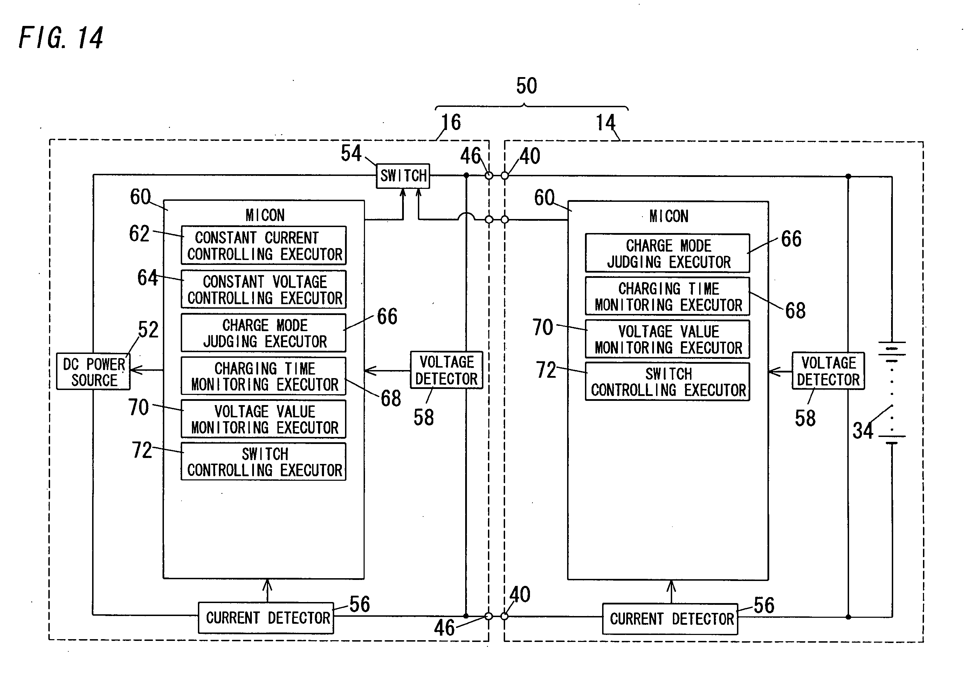

FIG. 14 shows a charging control system 50 of a fifth embodiment according to the present invention. The system 50 of the fifth embodiment is characterized by another current detector 56, another voltage detector 58 and another MICON 60, which are further comprised in the battery pack14 as compared with the first embodiment.

In the battery pack14 of the fifth embodiment, the another current detector 56 is electrically coupled between the one electrode terminal 40 and one output terminal of the rechargeable battery 34, and detects the charging current supplied to the battery 34 by the source 52. The another voltage detector 58 is electrically coupled in parallel with the battery 34, and detects the voltage of the battery 34.

The another MICON 60 contains another charge mode judging executor 66, another charging time monitoring executor 68, another voltage value monitoring executor 70 and another switch controlling executor 72 as well as the MICON 60 of the first embodiment. The another executor 66 judges whether present control (mode) is the constant current control or the constant voltage control based on the detected result of the another detector 56 or the another detector 58. The another executor 68 monitors whether or not the constant current charging time exceeds the threshold time (t1) by utilizing a built-in timer and the judging result of the another executor 66. The another executor 70 monitors whether or not the voltage detected by the another detector 58 in the constant current control (mode) exceeds the threshold voltage Vc by utilizing the judging result of the another executor 66. The another executor 72 controls on/off of the switch 54 as well as the executor 72 of the first embodiment by utilizing the monitoring result of the another executor 70.

Even in case that the switch 54 cannot be turned off due to any failure of the unit 16 side, the switch 54 can be turned off by the another MICON 60 combined with the another detectors 56, 58. As a result, the overcharge can be effectively prevented and it becomes possible to realize the charging control system which provides more safe control.

By locating the switch 54 at the charging unit 16, it is possible to easily make the battery pack compact and lightweight, so that the motor-driven tool with superior handling characteristics can be realized.

In an alternate embodiment, the charging control system 50 has the same configuration as the first embodiment (FIG. 4), and further equips the battery pack 14 with each block of its charging unit 16 except its DC power source 52 and switch 54. Or the system may have the same configuration as that in FIGs. 7, 11 or 13, and further equips the battery pack 14 with each block of its charging unit 16 except its DC power source 52, switch 54, constant current controlling executor 62 and constant voltage controlling executor 64, or its DC power source 52 and switch 54.

Although the present invention has been described with reference to certain preferred embodiments, numerous modifications and variations can be made by those skilled in the art without departing from the true spirit and scope of this invention.

For example, although the preferred embodiment includes not only the function (hereinafter referred to as a "first function") for controlling the switch 54 to open the above-mentioned electrical connection and keeps the connection open when the constant current charging time exceeds the threshold time (t1) but also the function (hereinafter referred to as a "second function") for controlling the switch 54 to open the electrical connection and keeps the connection open when the charging voltage exceeds the threshold voltage Vc, only the first function of the first and second functions may be included.

As still another example, the motor-driven tool 12 and the battery pack 14 may be inseparably unified. Or the tool 12, the pack 14 and the charging unit 16 may be inseparably unified.

The features disclosed in the foregoing description, in the claims and/or in the accompanying drawings may, both separately and in any combination thereof, be material for realising the invention in diverse forms thereof.

## Claims

1. A charging control system, comprising:
a DC power source which charges a rechargeable battery;
a current detector which detects current supplied to said battery by said source;
a voltage detector which detects voltage of said battery;
a constant current controller which controls said source so as to regulate the current detected by said current detector to be equal to a predetermined reference current until the voltage detected by said voltage detector reaches a predetermined threshold voltage;
a constant voltage controller which controls said source so as to regulate the voltage detected by said voltage detector to be equal to a predetermined reference voltage after the voltage detected by said voltage detector reaches said threshold voltage; and
a switch that opens or closes an electrical connection between said source and said battery;
wherein said system further comprises:
a switch controller which controls said switch to open said electrical connection and keeps the connection open when a constant current charging time exceeds a predetermined threshold time, said constant current charging time being time while said source is controlled by said constant current controller.

2. The system of claim 1, wherein said switch controller controls said switch to open said electrical connection and keeps the connection open when the voltage detected by said voltage detector exceeds said threshold voltage.

3. The system of claim 2, further comprising a temperature sensor which detects a temperature of said battery;
wherein said switch controller controls said switch to open said electrical connection and keeps the connection open when the temperature detected by said sensor exceeds a predetermined threshold temperature.

4. The system of claim 3, wherein said switch controller controls said switch to open said electrical connection and keeps the connection open when a level-of-rise per unit time in the temperature detected by said sensor exceeds a predetermined threshold level per unit time.

5. The system of claim 2, further comprising an amount counter which counts a total charging amount of said battery while said source is controlled by said constant current controller;
wherein said switch controller controls said switch to open said electrical connection and keeps the connection open when the amount counted by said counter exceeds a predetermined threshold amount.

6. The system of claim 2, further comprising a charging unit and a battery pack, wherein:
said charging unit is equipped with said DC power source, said current detector, said voltage detector, said constant current controller, said constant voltage controller, said switch and said switch controller;
said battery pack is equipped with said current detector, said voltage detector and said switch controller.

7. A motor-driven tool set, comprising the system of claim 1; wherein said motor-driven tool set comprises:
a motor-driven tool with a motor;
a battery pack with said rechargeable battery, said pack being removably mounted in said tool to electrically connect said battery to said motor;
a charging unit which includes said DC power source, said current detector, said voltage detector, said constant current controller, said constant voltage controller, said switch and said switch controller, said unit being electrically connected to said pack.
